# EUROPEAN PATENT SPECIFICATION

(11) **EP 3 778 341 B1**
(45) Date of publication and mention of the grant of the patent: **29.11.2023**
(21) Application number: 18914273.0
(22) Date of filing: 21.09.2018
(51) Int. Cl.: B61F 7/00, B60B 35/10, B60B 17/00, E01B 25/00

(54) **GROUND RAIL SWITCH STRUCTURE FOR GAUGE-CHANGEABLE BOGIE**
BODENSCHIENENWEICHE FÜR SPURWEITENWECHSELBARES DREHGESTELL
STRUCTURE D'AIGUILLAGE AU SOL POUR BOGIE À ÉCARTEMENT VARIABLE

(30) Priority: 13.04.2018 CN 201810333758
(43) Date of publication of application: 17.02.2021
(73) Proprietor: CRRC QINGDAO SIFANG CO., LTD., Chengyang District Qingdao Shandong 266111 (CN)
(72) Inventor: LIANG, Haixiao, Qingdao, Shandong 266111 (CN); YANG, Dongxiao, Qingdao, Shandong 266111 (CN); WANG, Yuguang, Qingdao, Shandong 266111 (CN); ZHU, Chongfei, Qingdao, Shandong 266111 (CN); WANG, Xu, Qingdao, Shandong 266111 (CN)
(74) Representative: Dilg, Haeusler, Schindelmann Patentanwaltsgesellschaft mbH
(86) International application number: PCT/CN2018/106982
(87) International publication number: WO 2019/196345

(56) References cited:
- CN-A- 103 192 843
- CN-A- 107 574 728
- CN-A- 107 757 652
- CN-A- 108 407 840
- CN-A- 108 515 979
- CN-A- 108 609 029
- CN-A- 108 909 760
- JP-A- H03 248 953
- JP-A- H08 169 338
- JP-B2- 3 265 153

## Description

### CROSS-REFERENCE TO RELATED APPLICATION

The present application claims priority to Chinese Application No. 2018103337585 filed on April 13, 2018, entitled "Ground Gauge-changing Structure with Gauge-changing Bogie".

### FIELD OF TECHNOLOGY

The present invention relates to the technical field of rail vehicle gauge change, in particular to a ground gauge-changing structure with a gauge-changing bogie.

### BACKGROUND

Currently, in order to meet the transportation requirements between rails with different gauges in neighboring countries, bogies with different distances between backs of the wheel flanges are generally replaced at the border with other countries, and thus this solution is costly and time-consuming. Hence, gauge-changing bogies have been invented in Spain and then in Japan to enable continuous running of trains on rails with different gauges.

At present, the wheels are directly laterally positioned through guide rails, but due to the existence of the guide rail gap, inaccurate positioning is prone to occur, which causes the locking pins to be subjected to greater lateral pressure applied by the axle-box body and the outer sleeve, and then lead to greater vertical friction during its action, such that it is easy to block the unlocking and locking actions of the locking pins, and unable to successfully unlock or lock. If the gauge is forcibly changed at this time, it will cause damage to the gauge-changing wheelset and result in heavy losses. JP3265153B2 discloses a gauge-changeable carriage for a rolling stock of high safety and reliability in which gauge change can be performed during run, and in which the occurrence of play in a wheel position lock mechanism can be prevented. Around an axle without rotating, an axle outer cylinder is engaged to be slidable in an axial direction, and a wheel is rotatably supported on the axle outer cylinder. A locking block is inserted on an end part of the axle outer cylinder, and protrusions in conical forms are respectively engaged in engagement holes in an axle box, when axial move of the axle outer cylinder is locked. Engagement of the conical protrusions with the engagement holes is performed by the weight of a carriage. A vibration-proofing unit for the protrusions is installed on the engagement hole, and the vibration-proofing unit 18 elastically energizes side surfaces of the protrusions engaged with the engagement holes. JPH08169338A discloses a variable gauge bogie and gauge changer device for rolling stock in which a left side axle is rotatably further movably supported on a journal box in the axial direction, to externally mount an outer cylinder through a roller bearing on the axle, to protrusively provide stop protrusions in the periphery of the outer cylinder, to provide a stop groove engraved in the internal periphery of the journal box, and a wheel is positioned in a narrow gage running rail, when the stop protrusion is engaged with the stop groove, and positioned in a standard gage running rail when the stop protrusion is engaged with the stop groove. Disengaging the stop protrusion from the stop groove is performed by moving the journal box relatively upward relating to the periphery by contact of a car body supporting part with car body supporting rails.

### SUMMARY

### (I) Technical problems to be solved

An embodiment of the present invention aims to solve at least one of the technical problems in the prior art or related technologies.

One of the embodiments of the present invention provides a ground gauge-changing structure with a gauge-changing bogie, so as to ensure smooth unlocking and locking of the gauge-changing wheelset.

### (II) Technical solutions

In order to solve the technical problems above, the present invention provides a ground gauge-changing structure with a gauge-changing bogie, comprising a pair of support rails provided in parallel and a pair of first guide rails, a pair of gauge-changing guide rails, and a pair of second guide rails provided in sequence along interior sides of the pair of support rails; an unlocking section is provided between each of the first guide rails and each of the gauge-changing guide rails, and a locking section is provided between each of the gauge-changing guide rails and each of the second guide rails; an interior/exterior side of the unlocking section and an interior/exterior side of the locking section are respectively provided with a pushing and positioning device which applies a lateral thrust to a gauge-changing wheelset of a gauge-changing bogie passing through the unlocking section and the locking section.

In an embodiment of the present invention, the gauge-changing wheelset includes wheels, an axle, and locking mechanisms; the wheels are respectively provided at both ends of the axle, and are connected with the axle through splines; the locking mechanisms are respectively provided on exterior sides of the wheels and located in an axle-box body at both ends of the axle; the locking mechanisms are connected with the wheels, and the pushing and positioning device applies a lateral thrust to the wheels passing through the unlocking section and the locking section.

In an embodiment of the present invention, the locking mechanism comprises an inner sleeve, a rolling bearing, an outer sleeve and locking pins.

In an embodiment of the present invention, the inner sleeve, the rolling bearing, and the outer sleeve are tightly sleeved in sequence from inside to outside, the inner sleeve is in clearance fit with the axle, and an end of the inner sleeve facing the wheel extends beyond the axle-box body and is firmly connected to the wheel; the outer sleeve is in clearance fit with an inner surface of the axle-box body, opposite sides outside the outer sleeve are provided with bosses axially extending along the outer sleeve, and a plurality of flutes are disposed at intervals along the length directions of the bosses; an interior side wall of the axle-box body is provided with concave arc surfaces corresponding to the flutesrespectively, and a locking space of the locking pin is defined by the flutes and the concave arc surfaces.

In an embodiment of the present invention, each locking pin comprises a pin body, one side of which is provided with an open groove penetrating along the radial direction of the pin body; the open groove is provided with at least one lug extending axially along the pin body, an upper end of the lug is connected with a groove top of the open groove, and a notch is reserved between a lower end of the lug and a groove bottom of the open groove; the lug is inserted into the flute, and a side of the pin body opposite to the lug is inserted into the concave arc surface.

In an embodiment of the present invention, a bottom surface of the pin body is respectively provided on both sides of the central axis thereof as a guide slant sloping upward from the central axis to both sides; the pin body is mounted in the axle-box body through a return spring; an upper end of the pin body is connected with the return spring, and a lower end of the pin body extends beyond a bottom surface of the axle-box body.

In an embodiment of the present invention, upper surfaces of the first guide rail, the gauge-changing guide rail and the second guide rail are provided with guide grooves for allowing the wheels to run; a section of the support rail opposite to the unlocking section is provided with an upward-sloping unlocking slant; a section of the support rail opposite to the locking section is provided with a downward-sloping locking slant, and the unlocking slant, the locking slant, and the guide slant have the same angle of slope.

According to the present invention, an inner end surface of the axle-box body is provided with a through hole for allowing the outer sleeve to slide, inner stoppers are formed at a circumference of the through hole, an outer end cover is disposed on an outer end surface of the axle-box body, and outer stoppers are respectively disposed on both lower axial ends of the axle-box body; an end of the first guide rail facing the gauge-changing guide rail is configured as a downward-sloping first slope surface, and an end of the second guide rail facing the gauge-changing guide rail is configured as a upward-sloping second slope surface. When the gauge-changing wheelset passes through the first slope surface, the axle-box body is supported on the support rails and the outer stoppers on both axial ends of the axle-box body are respectively disposed at opposite sides of the support rails.

In an embodiment of the present invention, the pushing and positioning device includes a plurality of telescopic push rods arranged at intervals along the length direction of the support rail, and the axial direction of the telescopic push rods is perpendicular to the length direction of the support rails.

In an embodiment of the present invention, the pushing and positioning device further includes a fixed part fixed to a ground, the telescopic push rods may move back and forth along the axial direction of the fixed part, and an end of the telescopic push rod is provided with an elastic sleeve.

In an embodiment of the present invention, the pushing and positioning device is a hydraulic or pneumatic actuator.

In an embodiment of the present invention, the gauge between the pair of first guide rails is smaller than the gauge between the pair of second guide rails; the pushing and positioning device is disposed on an exterior side of the support rails opposite to the unlocking section, and is disposed on an interior side of the locking section.

In an embodiment of the present invention, the pushing and positioning devices are arranged extending outward along both ends of the unlocking section; the pushing and positioning devices are arranged extending outward along both ends of the locking section.

In an embodiment of the present invention, positioning holes for allowing the telescopic push rods to pass are respectively provided at positions on the pair of the support rails outside the unlocking section opposite to the pushing and positioning device.

### (III) Beneficial effects

Compared with the prior art, the present invention has at least the following advantages:
The embodiments of the present invention provide a ground gauge-changing structure with a gauge-changing bogie, in which pushing and positioning devices are respectively provided on an interior side or exterior side of the unlocking section and the locking section of the ground gauge-changing structure. The lateral thrust is applied by the pushing and positioning device to the gauge-changing wheelset of the gauge-changing bogie passing through the unlocking section and the locking section, so that the wheels at both sides of the gauge-changing wheelset are slightly displaced relative to the guide rails on which the gauge-changing wheelset runs, so as to readjust the positional relationships among the components matching each other on the gauge-changing wheelset, and facilitate improvement of the positioning precision, and thereby ensure smooth unlocking and locking of the gauge-changing wheelset.

The embodiments of the present invention provide a gauge-changing wheelset, in which the locking mechanisms are respectively provided on the exterior sides of the wheels. A part of the axle between the interior sides of the wheels is consistent with the traditional axle. Thus, on the one hand, there is enough design space for the motor, gearbox and other components mounted on the axle between the interior sides of the wheels; and on the other hand, the interface can be consistent with that of existing vehicles, which is convenient for mass modification of the existing vehicles. In addition, the wheels and the axle are connected through splines, thereby the torque is evenly distributed on the inner circumferences of the wheels, which facilitates not only the transmission of torque, but also the sliding of the wheels along the axle to change the gauge.

### BRIEF DESCRIPTION OF THE DRAWINGS

Fig. 1 is a top view of the overall structure of the ground gauge-changing structure for a gauge-changing bogie according to an embodiment of the present invention;
Fig. 2 (a) and Fig. 2 (b) are respectively a side view and a front view of the gauge-changing wheelset passing through the first guide rails according to an embodiment of the present invention;
Fig. 3 (a) and Fig. 3 (b) are respectively a side view and a front view of a case in which the gauge-changing wheelset passes through a rail lowering section according to an embodiment of the present invention;
Fig. 4 (a) and Fig. 4 (b) are respectively a side view and a front view of a case in which the gauge-changing wheelset passes through the unlocking sections according to an embodiment of the present invention;
Fig. 5 (a) and Fig. 5 (b) are respectively a side view and a front view of a case in which the gauge-changing wheelset just enters the gauge-changing guide rail according to an embodiment of the present invention;
Fig. 6 (a) and Fig. 6 (b) are respectively a side view and a front view of a case in which the gauge-changing wheelset just exits the gauge-changing guide rail according to an embodiment of the present invention;
Fig. 7 (a) and Fig. 7 (b) are respectively a side view and a front view of a case in which the gauge-changing wheelset passes through the locking sections according to an embodiment of the present invention;
Fig. 8 (a) and Fig. 8 (b) are respectively a side view and a front view of a case in which the gauge-changing wheelset is just about to enter a rail lifting section according to an embodiment of the present invention;
Fig. 9 (a) and Fig. 9 (b) are respectively a side view and a front view of a case in which the gauge-changing wheelset passes through the rail lifting section according to an embodiment of the present invention;
Fig. 10 (a) and Fig. 10 (b) are respectively a side view and a front view of a case in which the gauge-changing wheelset passes through the second guide rails according to an embodiment of the present invention;
Fig. 11 is an axial partial cross-sectional view of the positional relation between the gauge-changing wheelset and the axle-box body (abutting against the inner stopper) according to an embodiment of the present invention;
Fig. 12 is an axial partial cross-sectional view of the positional relation between the gauge-changing wheelset and the axle-box body (abutting against the outer end cover) according to an embodiment of the present invention;
Fig. 13 is a schematic diagram of a case in which the pushing and positioning device pushes from the exterior side of the wheel according to an embodiment of the present invention;
Fig. 14 is a schematic diagram of a case in which the pushing and positioning device pushes from the interior side of the wheel according to an embodiment of the present invention; and
Fig. 15 is a three-dimensional schematic diagram of the locking pin according to an embodiment of the present invention;

**Reference numerals:**

| | | | |
|---|---|---|---|
| 10 | support rail | 20 | first guide rail |
| 21 | rail lowering section | 30 | gauge-changing guide rail |
| 40 | second guide rail | 41 | rail lifting section |
| 50 | unlocking section | 60 | locking section |
| 70 | pushing and positioning device | 71 | telescopic push rod |
| 72 | fixed part | 80 | gauge-changing wheelset |
| 81 | wheel | 82 | axle |
| 83 | outer sleeve | 831 | boss |
| 832 | flute | 84 | rolling bearing |
| 86 | locking pin | 861 | pin body |
| 862 | open groove | 863 | lug |
| 864 | notch | 865 | guide slant |
| 90 | axle-box body | 91 | concave arc surface |
| 92 | inner stopper | 93 | outer end cover |
| 94 | outer stopper | 100 | unlocking slant |
| 110 | locking slant | | |

### DETAILED DESCRIPTION

Specific embodiments of the present invention will be described in further detail below in conjunction with the drawings and embodiments. The following examples are used to illustrate the present invention, rather than to limit the scope of the present invention.

With respect to the description of the present invention, it should be noted that the orientation or positional relation indicated by the terms such as "center", "longitudinal", "lateral", "upper", "lower", "front", "back", "left", "right", "vertical", "horizontal", "top", "bottom", "inner", "outer" is based on the orientation or positional relationship shown in the drawings, the purpose of which is only to facilitate describing the present invention and simplify the description, rather than to indicate or imply that the device or element referred to must have a specific orientation, be constructed and operated in a specific orientation, and therefore cannot be construed as a limitation of the present invention. In addition, the terms "first," "second" and "third" are for descriptive purpose only, and cannot be understood as indicating or implying the relative importance.

In the description of the present invention, it should be noted that, unless otherwise clearly specified or defined, the terms "install", "connect with" and "connect to" should be understood in a broad sense, for example, it can be a fixed connection or a detachable connection, or an integral connection; it can be mechanically connected or electrically connected; it can be directly connected or indirectly connected through an intermediary, and can be communication between interiors of two elements. For those of ordinary skill in the art, the specific meaning of the above terms in the present invention can be understood according to the specific situations.

In addition, in the description of the present invention, unless otherwise specified, "a plurality of', "multiple", and "multiple sets" mean two or more.

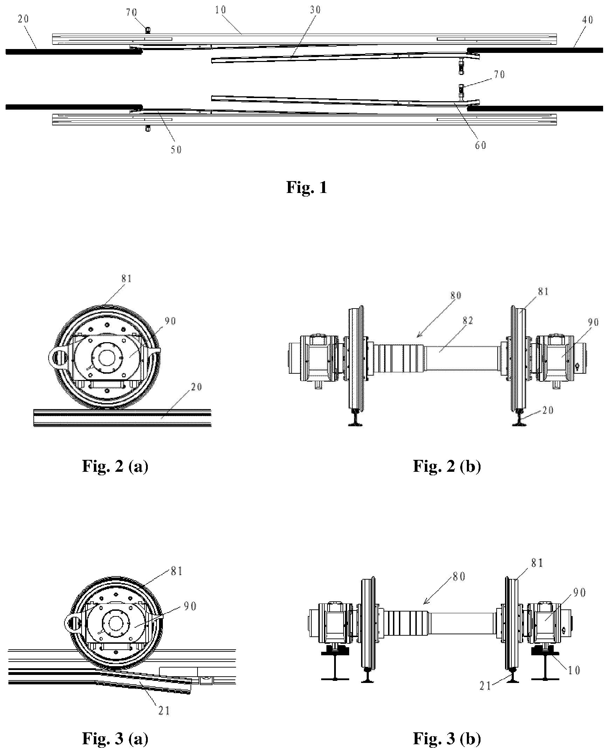

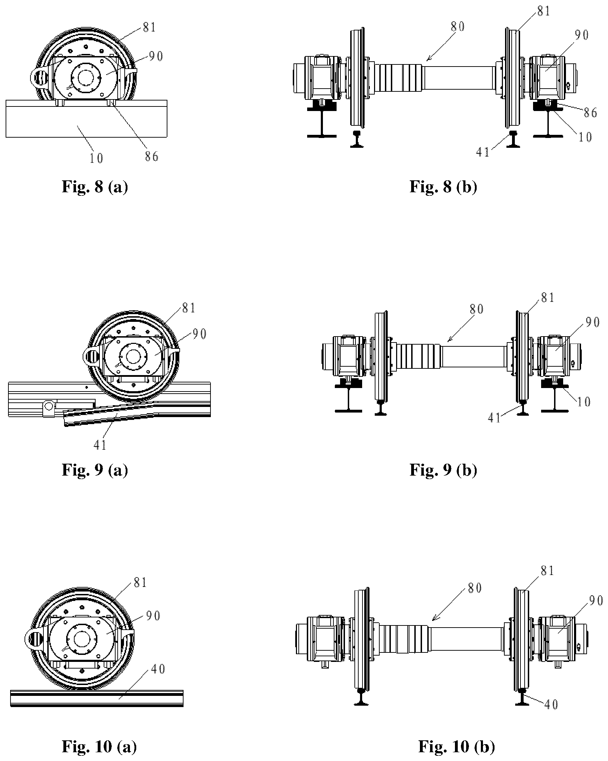

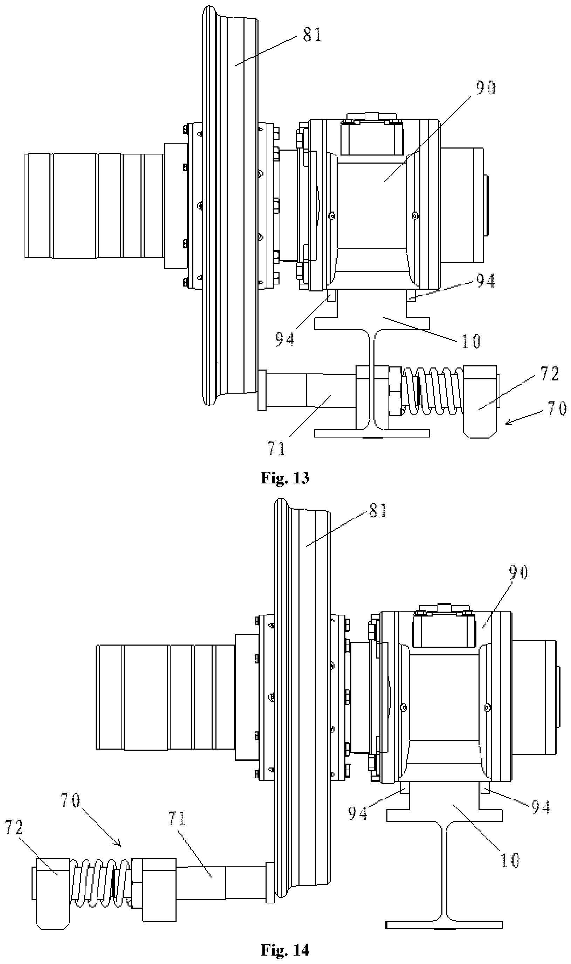

Fig. 1 shows a ground gauge-changing structure with a gauge-changing bogie provided by an embodiment of the present invention. The structure comprises a pair of support rails 10 provided in parallel and a pair of first guide rails 20, a pair of gauge-changing guide rails 30, and a pair of second guide rails 40 provided in sequence along interior sides of the pair of support rails 10. Both ends of the first guide rail 20 and both ends of the second guide rail 40 extend in parallel into interior sides of the pair of support rails 10 from outside to inside. Upper surfaces of the first guide rail 20, the gauge-changing guide rail 30 and the second guide rail 40 are all provided with guide grooves for allowing the wheels 81 to run. Normally, the wheel 81 runs in the guide groove with a certain gap. In the present embodiment, it will be described by taking the direction in which the train runs from the first guide rail 20 to the second guide rail 40 as the forward direction; and the gauge between the pair of first guide rails 20 is smaller than the gauge between the pair of second guide rails 40, i.e., the gauge change from a standard gauge to a wide gauge. Fig. 2 (a), Fig. 2 (b) to Fig. 10 (a), Fig. 10 (b) show an entire gauge change process of the gauge-changing wheelset 80 from the first guide rail 20 to the second guide rail 40. An unlocking section 50 is provided between each of the first guide rails 20 and each of the gauge-changing guide rails 30; and a locking section 60 is provided between each of the gauge-changing guide rails 30 and each of the second guide rails 40. An inner/exterior side of the unlocking section 50 and an interior/exterior side of the locking section 60 are respectively provided with a pushing and positioning device 70. In an embodiment of the present invention, preferably, as shown in Fig. 13, the pushing and positioning device 70 is disposed on both an exterior side of the unlocking section 50 and on an exterior side of the corresponding said support rail 10. As shown in Fig. 14, the pushing and positioning device 70 is disposed on an interior side of the locking section 60, and is configured to apply a lateral thrust to the gauge-changing wheelset 80 of the gauge-changing bogie passing through the unlocking section 50 and the locking section 60, so as to cause displacements of the wheels 81 at both axial ends of the gauge-changing wheelset 80 relative to the gaps of the guide grooves (of course, the displacement is very small). Thus, the wheels 81 can run within the allowable tolerance range; and the positional relation of the components on both sides of the gauge-changing wheelset 80 can be readjusted, so as to more accurately positioning the components and provide smooth unlocking and locking.

In an embodiment of the present invention, as shown in Figs. 1-15, the specific structure of the gauge-changing bogie will be introduced firstly, and then the specific structure of the pushing and positioning device 70 will be introduced. Specifically, the gauge-changing bogie is provided with a pair of parallel gauge-changing wheelset 80 including wheels 81, axle 82 and locking mechanisms. The wheels 81 are disposed at both ends of the axle 82, and are connected with the axle 82 through splines, so as to facilitate the transmission of torque and the sliding of the wheels 81 along the axle 82. The locking mechanisms are respectively disposed on the exterior sides of the wheels 81 and located in an axle-box body 90 at both ends of the axle 82; and the locking mechanisms are connected with the wheels 81. When a gauge is changed, the wheel 81 drives the locking mechanism to move together; meanwhile, the locking mechanism moves along the axle-box body 90. The pushing and positioning device 70 is configured to apply a lateral thrust to the wheel 81 passing through the unlocking section 50 and the locking section 60. The pushing and positioning device 70 can be extendedly arranged near the unlocking section 50 and the locking section 60 for applying a lateral thrust to the wheels 81 before and after entering the unlocking section 50 and the locking section 60, so that the positional relation between the locking mechanism and the axle-box body 90 can be readjusted to keep the wheel 81 in a precisely positioned position both before and after unlocking and locking.

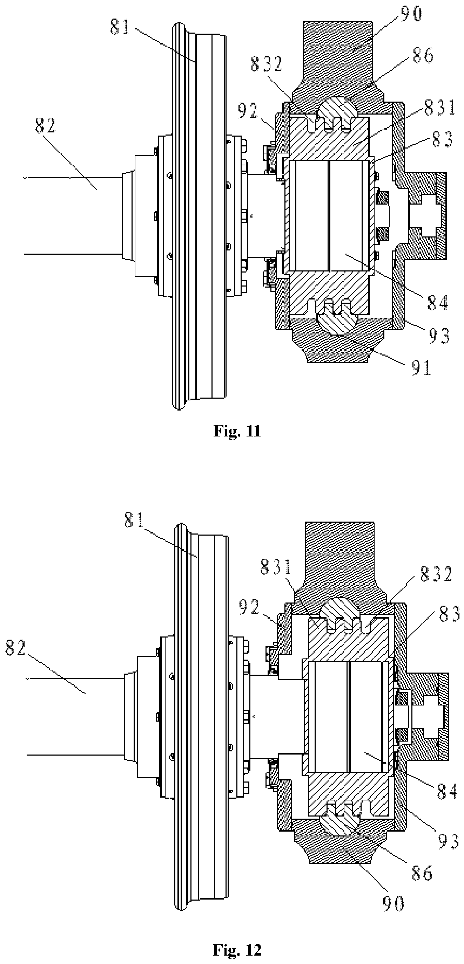

As shown in Figs. 11-12, further, the locking mechanism may specifically include an inner sleeve (not shown in the figure), a rolling bearing 84, an outer sleeve 83 and locking pins 86.

The inner sleeve, the rolling bearing 84, and the outer sleeve 83 are tightly sleeved in sequence from inside to outside. The inner sleeve is in clearance fit with the axle 82; and an end of the inner sleeve facing the wheel 81 extends beyond the axle-box body 90 and is firmly connected to the wheel 81. The outer sleeve 83 is in clearance fit with an inner surface of the axle-box body 90. Opposite sides outside the outer sleeve 83 are provided with bosses 831 axially extending along the outer sleeve 83. A plurality of flutes 832 are disposed at intervals along the length directions of the bosses 831. An interior side wall of the axle-box body 90 is provided with concave arc surfaces 91 corresponding to the flutes 832respectively. A locking space of the locking pin 86 is defined by the flutes 832 and the concave arc surfaces 91. Specifically, when the locking pin 86 is inserted into the locking space, a part of the locking pin 86 is located in the flute 832. The other part thereof fits the concave arc surface 91; and the position of the outer sleeve 83 is fixed relative to the axle-box body 90 to lock and then the position of the wheel 81 is fixed relative to the axle 82. When the gauge needs to be changed, the locking pins 86 are disengaged from the locking space in which it is located under the action of an external force to unlock. In the present embodiment, an upward thrust is preferably used to disengage the locking pins 86 from the locking space; meanwhile, the gauge-changing guide rail 30 is employed to push the wheels 81 to move outward or inward along the axle 82. Specifically, the guide grooves on the gauge-changing guide rails 30 are arranged angularly, for example, the angle between the guide grooves becomes gradually larger or smaller. When the wheel 81 passes through the guide groove, it is subjected to an inward or outward extruding force, and then drives the outer sleeve 83 to move relative to the axle-box body 90 and the locking pins 86. When the locking space corresponding to the change in the gauge moves to just below the locking pin 86, the locking pins 86 are inserted into the locking space under the action of its own gravity and downward force, and the gauge of the wheel 81 is changed completely.

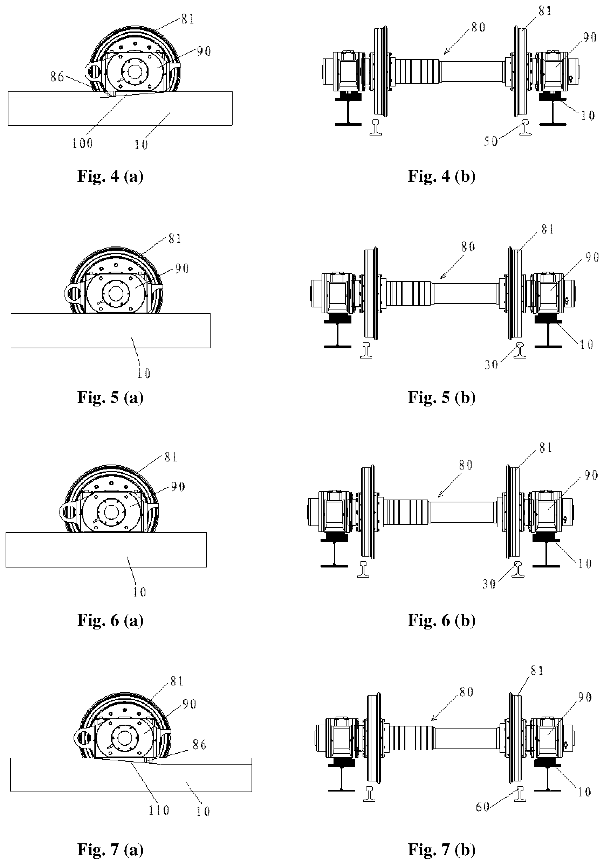

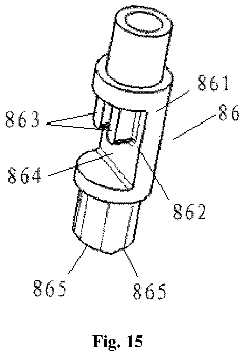

Specifically, as shown in Fig. 15, the locking pin 86 may include a pin body 861, one side of which is provided with an open groove 862 penetrating along the radial direction of the pin body 861. The open groove 862 is provided with at least one lug 863 extending along the axial direction of the pin body 861. Preferably, two parallel lugs 863 are provided to improve the forces on individual lugs 863 and enhance reliability. An upper end of the lug 863 is connected with a groove top of the open groove 862; and a notch 864 is provided between a lower end of the lug 863 and a groove bottom of the open groove 862. The lugs 863 are inserted into the flute 832. A side of the pin body 861 opposite to the lugs 863 are inserted into the concave arc surface 91. Further, a bottom surface of the pin body 861 is respectively provided on both sides of the central axis thereof as a guide slant 865 sloping upward from the central axis to both sides. The pin body 861 is mounted in the axle-box body 90 through a return spring; an upper end of the pin body 861 is connected with the return spring; and a lower end of the pin body 861 extends beyond a bottom surface of the axle-box body 90, so as to facilitate the ground gauge-changing structure to exert force on the pin body 861 to change the gauge. As shown in Fig. 4 (a), a section of the support rail 10 opposite to the unlocking section 50 is provided with an upward-sloping unlocking slant 100. When the gauge is changed, the locking pins 86 located on both sides of the outer sleeve 83 pass through the unlocking slant 100 simultaneously, and the pin bodies 861 are gradually lifted by an upward acting force, and are disengaged from the flutes 832 from bottom to top so as to unlock completely. Firstly, the lugs 863 are disengaged from the flutes 832 from bottom to top, and moves to a position above the flutes 832. Then, the notch 864 under the lug 863 is opposite to the boss 831 between the two flutes 832. The wheels 81 are applied with an external force to the left or right by the gauge-changing guide rail 30. The outer sleeve 83 moves along with the wheels 81. The boss 831 clips into the notch 864 and moves along the notch 864. The lower end of the lug 863 is supported on the boss surface of the boss 831 until it moves to the position of another flute 832. As shown in Fig. 7 (a), a section of the support rail 10 opposite to the locking section 60 is provided with a downward-sloping locking slant 110. When the locking pins 86 located on both sides of the outer sleeve 83 pass through the locking slant 110 simultaneously, the pin body 861 gradually moves downward along the downward-sloping locking slant 110 under the action of its own gravity and the downward force of the return spring, until the lug 863 is inserted into the flutes 832 to finish the locking, and thus the gauge is changed. Further, in order to ensure smooth and stable unlocking and locking, the unlocking slant 100, the locking slant 110, and the guide slant 865 share the same angle of slope.

Specifically, as shown in Figs. 11-12, an inner end surface of the axle-box body 90 is provided with a through hole for allowing the outer sleeve 83 to slide. Inner stoppers 92 are formed at a circumference of the through hole. An outer end cover 93 is disposed on an outer end surface of the axle-box body 90. As shown in FIGS. 13-14, outer stoppers 94 are respectively disposed on both lower axial ends of the axle-box body 90. As shown in Fig. 3 (a), an end of the first guide rail 20 facing the gauge-changing guide rail 30 is configured as a downward-sloping first slope surface to form a rail lowering section 21. The specific working principle of the embodiment of the present invention is as follows: when the gauge-changing wheelset 80 passes through the rail lowering section 21, the wheels 81 are unloaded, and the axle-box body 90 plays a role of supporting, meanwhile, the outer stoppers 94 at its lower axial ends are respectively provided on both sides of the support rail 10. The bogie as a whole is driven by the support rail 10 to move forward until it passes through the gauge-changing guide rail 30, and then the gauge is changed. As shown in Fig. 9 (a), an end of the second guide rail 40 facing the gauge-changing guide rail 30 is configured as an upward-sloping second slope surface to form a rail lifting section 41. After the gauge is changed completely, the gauge-changing wheelset 80 passes through the rail lifting section 41 and then is supported by the wheel 81. Since both the unlocking section 50 and the locking section 60 are provided with the pushing and positioning device 70. When the wheelset gets close to the unlocking section 50. As shown in Fig. 13, the pushing and positioning device 70 presses the wheels 81 from the exterior side of the wheelset; at this time, the wheels 81 drive the outer sleeve 83 to move slightly inward, so that the outer sleeve 83 abuts against the inner stopper 92 at an inner end of the axle-box body 90. As shown in Fig. 11; and the exterior side of the support rail 10 abuts against the outer stopper 94 of the lower axial outer end of the axle-box body 90 (as shown in Fig. 13); at this time, both sides of the lug 863 of the locking pin 86 apply no force on the flute 832, i.e., no locking force; and the wheel set is ready for the next gauge change. The support rail 10, the axle-box body 90, the outer sleeve 83, and the locking pins 86 are accurately positioned. The lateral force exerted by the axle-box body 90 and the outer sleeve 83 on the locking pins 86 is reduced, and thus the vertical frictional resistance during the action of the locking pins 86 is decreased, which facilitates the smooth unlocking action of the locking pins 86.

When the wheelset gets close to the locking section 60, as shown in Fig. 14, the pushing and positioning device 70 presses the wheel 81 from the interior side of the wheelset, and then the wheels 81 drive the outer sleeve 83 to move slightly outward, so that the outer sleeve 83 abuts against the outer end cover 93 of the axle-box body 90, as shown in Fig. 12. At this time, the interior side of the support rail 10 abuts against the outer stopper 94 of the lower axial inner end of the axle-box body 90 (as shown in Fig. 14). Both sides of the lug 863 of the locking pin 86 have no force with the flute 832. The support rail 10, the axle-box body 90, the outer sleeve 83, and the locking pins 86 are accurately positioned. The lateral force exerted by the axle-box body 90 and the outer sleeve 83 on the locking pins 86 is reduced and thus the vertical frictional resistance during the action of the locking pins 86 is decreased, which facilitates the smooth locking action of the locking pins 86.

When the gauge-changing wheelset 80 moves from the second guide rail 40 to the first guide rail 20, the original locking section 60 becomes the unlocking section 50; the original unlocking section 50 becomes the locking section 60; and the gauge is changed from the wide gauge to the standard gauge. Thus, the whole process is contrary to the aforementioned process.

In an embodiment of the present invention, as shown in Figs. 13-14, the pushing and positioning device 70 preferably includes a plurality of telescopic push rods 71 arranged at intervals along the length direction of the support rail 10; and the axial direction of the telescopic push rod 71 is perpendicular to the length direction of the support rail 10. The pushing and positioning device 70 further includes a fixed part 72 fixed to the ground, the telescopic push rod 71 may move back and forth along the axial direction of the fixed part 72, and an end of the telescopic push rod 71 is provided with an elastic sleeve to reduce the friction between the telescopic push rod 71 and the wheel 81. Preferably, the pushing and positioning device is a hydraulic or pneumatic actuator to facilitate automatic application of thrust according to control instructions.

In order to facilitate the telescopic push rod 71 to directly about the wheels 81, positioning holes for the telescopic push rod 71 to pass are respectively provided at positions on the pair of the support rails 10 outside the unlocking section 50 opposite to the pushing and positioning device 70.

It should be noted that, in order to reduce the friction between the axle-box body 90 and the support rail 10, the upper surface of the support rail 10 may be provided with multiple rollers arranged along the length of the support rail 10 with the direction of the rollers being consistent with the moving direction of the axle-box body 90. In addition, in order to improve the wear resistance of the axle-box body 90, a wear-resistant plate can be added to the bottom surface of the axle-box body 90.

In addition, in order to smoothly apply lateral thrust to the wheel 81 before and after entering the unlocking section 50, and to apply the lateral thrust to the wheel 81 before and after entering the locking section 60, the pushing and positioning devices 70 are arranged extending outward along both ends of the unlocking section 50, and are arranged extending outward along both ends of the locking section 60.

According to the embodiments of the present invention that, by providing the pushing and positioning devices 70 in the unlocking section 50 and its vicinity, and the locking section 60 and its vicinity, the positioning accuracy of the locking mechanisms of the gauge-changing wheelset 80 is improved, which facilitates smooth unlocking/locking action of the locking pins 86.

The descriptions above are only preferred embodiments of the present invention and are not intended to limit the present invention.

## Claims

1. A ground gauge-changing structure with a gauge-changing bogie, the ground gauge-changing structure comprising a pair of support rails (10) provided in parallel and a pair of first guide rails (20), a pair of gauge-changing guide rails (30), and a pair of second guide rails (40) provided in sequence along interior sides of the pair of support rails (10); an unlocking section (50) is provided between each of the first guide rails (20) and each of the gauge-changing guide rails (30), and a locking section (60) is provided between each of the gauge-changing guide rails (30) and each of the second guide rails (40); an inner/exterior side of the unlocking section (50) and an inner/exterior side of the locking section (60) are respectively provided with a pushing and positioning device which applies a lateral thrust to a gauge-changing wheelset (80) of a gauge-changing bogie passing through the unlocking section (50) and the locking section (60); the gauge-changing wheelset (80) comprises wheels (81), an axle (82), and locking mechanisms; an axle-box body (90) is disposed at each of both ends of the axle (82); the locking mechanism comprises an inner sleeve, a rolling bearing (84), an outer sleeve (83) and locking pins (86);
**characterized in that,** an inner end surface of the axle-box body (90) is provided with a through hole for allowing the outer sleeve (83) to slide, inner stoppers (92) are formed at a circumference of the through hole, an outer end cover (93) is disposed on an outer end surface of the axle-box body (90), and outer stoppers (94) are respectively disposed on both lower axial ends of the axle-box body (90); an end of the first guide rail (20) facing the gauge-changing guide rail (30) is configured as a downward-sloping first slope surface, and an end of the second guide rail (40) facing the gauge-changing guide rail (30) is configured as an upward-sloping second slope surface.

2. The ground gauge-changing structure with a gauge-changing bogie of claim 1, **characterized in that**,; the wheels (81) are respectively provided at both ends of the axle (82), and are connected with the axle (82) through splines; the locking mechanisms are respectively provided on exterior sides of the wheels (81) and located in the axle-box body (90); the locking mechanisms are connected with the wheels (81), and the pushing and positioning device (70) applies a lateral thrust to the wheels (81) passing through the unlocking section (50) and the locking section (60).

3. The ground gauge-changing structure with a gauge-changing bogie of claim 2,
**characterized in that**,
the inner sleeve, the rolling bearing (84), and the outer sleeve (83) are tightly sleeved in sequence from inside to outside, the inner sleeve is in clearance fit with the axle (82), and an end of the inner sleeve facing the wheel (81) extends beyond the axle-box body (90) and is firmly connected to the wheel (81); the outer sleeve (83) is in clearance fit with an inner surface of the axle-box body (90), opposite sides outside the outer sleeve (90) are provided with bosses (831) axially extending along the outer sleeve (83), and a plurality of flutes (832) are disposed at intervals along the length directions of the bosses (831); an interior side wall of the axle-box body (90) is provided with concave arc surfaces (91) corresponding to the flutes (832) respectively, and a locking space of the locking pin (86) is defined by the flutes (832) and the concave arc surfaces (91).

4. The ground gauge-changing structure with a gauge-changing bogie of claim 3, **characterized in that**, the locking pin (86) comprises a pin body (861), one side of which is provided with an open groove (862) penetrating along the radial direction of the pin body (861); the open groove (862) is provided with at least one lug (863) extending along the axial direction of the pin body (861), an upper end of the lug (863) is connected with a groove top of the open groove (862), and a notch (864) is reserved between a lower end of the lug (863) and a groove bottom of the open groove (862); the lug (863) is inserted into the flute (832), and a side of the pin body (861) opposite to the lug (863) is inserted into the concave arc surface (91).

5. The ground gauge-changing structure with a gauge-changing bogie of claim 4, **characterized in that**, a bottom surface of the pin body (861) is respectively provided on both sides of the central axis (82) of the pin body (861) as a guide slant (865) sloping upward from the central axis (82) to both sides; the pin body (861) is mounted in the axle-box body (90) through a return spring; an upper end of the pin body (861) is connected with the return spring, and a lower end of the pin body (861) extends beyond a bottom surface of the axle-box body (90).

6. The ground gauge-changing structure with a gauge-changing bogie of claim 5, **characterized in that**, a section of the support rail (10) opposite to the unlocking section (50) is provided with an upward-sloping unlocking slant (100); a section of the support rail (10) opposite to the locking section (60) is provided with a downward-sloping locking slant (110), and the unlocking slant (100), the locking slant (110), and the guide slant (865) have the same angle of slope.

7. The ground gauge-changing structure with a gauge-changing bogie of any one of claims 1-6, **characterized in that**, the pushing and positioning device (70) comprises a plurality of telescopic push rods (71) arranged at intervals along the length direction of the support rail (10), and the axial direction of the telescopic push rod (71) is perpendicular to the length direction of the support rail (10).

8. The ground gauge-changing structure with a gauge-changing bogie of claim 7, **characterized in that**, the pushing and positioning device (70) further comprises a fixed part fixed to a ground, the telescopic push rod (71) moves back and forth along the axial direction of the fixed part, and an end of the telescopic push rod (71) is provided with an elastic sleeve.

9. The ground gauge-changing structure with a gauge-changing bogie of claim 8, **characterized in that**, the pushing and positioning device (70) is a hydraulic or pneumatic actuator.

10. The ground gauge-changing structure with a gauge-changing bogie of claim 7, **characterized in that**, the gauge between the pair of first guide rails (20) is smaller than the gauge between the pair of second guide rails (40); the pushing and positioning device (70) is disposed on an exterior side of the support rail (10) opposite to the unlocking section (50), and is disposed on an interior side of the locking section (60).

11. The ground gauge-changing structure with a gauge-changing bogie of claim 10, **characterized in that**, the pushing and positioning devices (70) are arranged extending outward along both ends of the unlocking section (50); the pushing and positioning devices (70) are arranged extending outward along both ends of the locking section (60).

12. The ground gauge-changing structure with a gauge-changing bogie of claim 10, **characterized in that**, positioning holes for allowing the telescopic push rod (71) to pass are respectively provided at positions on the pair of the support rails (10) outside the unlocking section opposite to the pushing and positioning device (70).

## Patentansprüche

1. Bodenspurweitenwechselstruktur mit einem Spurwechselfahrwerk, wobei die Bodenspurweitenwechselstruktur ein Paar parallel angeordnete Tragschienen (10) und ein Paar erste Führungsschienen (20), ein Paar Spurweitenänderungs-Führungsschienen (30) und ein Paar zweite Führungsschienen (40) aufweist, die nacheinander entlang der Innenseiten des Paares von Tragschienen (10) angeordnet sind; wobei ein Entriegelungsabschnitt (50) zwischen jeder der ersten Führungsschienen (20) und jeder der Spurweitenänderungs-Führungsschienen (30) vorgesehen ist, und ein Verriegelungsabschnitt (60) zwischen jeder der Spurweitenänderungs-Führungsschienen (30) und jeder der zweiten Führungsschienen (40) vorgesehen ist; eine Innen-/Außenseite des Entriegelungsabschnitts (50) und eine Innen-/Außenseite des Verriegelungsabschnitts (60) jeweils mit einer Schiebe- und Positioniervorrichtung versehen sind, die einen seitlichen Schub auf einen Spurwechselradsatz (80) eines den Entriegelungsabschnitt (50) und den Verriegelungsabschnitt (60) durchlaufenden Spurwechselfahrwerks ausübt; der Spurwechselradsatz (80) Räder (81), eine Achse (82) und Verriegelungsmechanismen aufweist; wobei ein Achslagerkörper (90) an jedem der beiden Enden der Achse (82) angeordnet ist; der Verriegelungsmechanismus eine innere Hülse, ein Wälzlager (84), eine äußere Hülse (83) und Verriegelungsstifte (86) aufweist;
**dadurch gekennzeichnet, dass** eine innere Endfläche des Achslagerkörpers (90) mit einem Durchgangsloch versehen ist, um ein Gleiten der äußeren Hülse (83) zu ermöglichen, innere Anschläge (92) an einem Umfang des Durchgangslochs ausgebildet sind, eine äußere Endabdeckung (93) an einer äußeren Endfläche des Achslagerkörpers (90) angeordnet ist und äußere Anschläge (94) jeweils an beiden unteren axialen Enden des Achslagerkörpers (90) angeordnet sind; ein Ende der ersten Führungsschiene (20), das der Spurweitenänderungs-Führungsschiene (30) zugewandt ist, als eine nach unten geneigte erste Neigungsfläche ausgebildet ist, und ein Ende der zweiten Führungsschiene (40), das der Spurweitenänderungs-Führungsschiene (30) zugewandt ist, als eine nach oben geneigte zweite Neigungsfläche ausgebildet ist.

2. Bodenspurweitenwechselstruktur mit einem Spurwechselfahrwerk nach Anspruch 1, **dadurch gekennzeichnet, dass** die Räder (81) jeweils an beiden Enden der Achse (82) vorgesehen sind und über Keilnuten mit der Achse (82) verbunden sind; die Verriegelungsmechanismen jeweils an den Außenseiten der Räder (81) vorgesehen und in dem Achslagerkörper (90) angeordnet sind; die Verriegelungsmechanismen mit den Rädern (81) verbunden sind und die Schiebe- und Positioniervorrichtung (70) einen seitlichen Schub auf die Räder (81) ausübt, die den Entriegelungsabschnitt (50) und den Verriegelungsabschnitt (60) durchlaufen.

3. Bodenspurweitenwechselstruktur mit einem Spurwechselfahrwerk nach Anspruch 2, **dadurch gekennzeichnet, dass**,
die Innenhülse, das Wälzlager (84) und die äußere Hülse (83) nacheinander von innen nach außen dicht ummantelt sind, die Innenhülse in Spielpassung mit der Achse (82) ist und ein dem Rad (81) zugewandtes Ende der Innenhülse über den Achslagerkörper (90) hinausragt und fest mit dem Rad (81) verbunden ist; die äußere Hülse (83) in Spielpassung mit einer Innenfläche des Achslagerkörpers (90) ist, gegenüberliegende Seiten außerhalb der äußeren Hülse (90) mit Vorsprüngen (831) versehen sind, die sich axial entlang der äußeren Hülse (83) erstrecken, und eine Vielzahl von Nuten (832) in Abständen entlang der Längsrichtungen der Vorsprünge (831) angeordnet sind; eine innere Seitenwand des Achslagerkörpers (90) mit konkaven Bogenflächen (91) versehen ist, die jeweils den Nuten (832) entsprechen, und ein Verriegelungsraum des Verriegelungsstifts (86) durch die Nuten (832) und die konkaven Bogenflächen (91) definiert ist.

4. Bodenspurweitenwechselstruktur mit einem Spurwechselfahrwerk nach Anspruch 3, **dadurch gekennzeichnet, dass** der Verriegelungsstift (86) einen Stiftkörper (861) aufweist, dessen eine Seite mit einer offenen Nut (862) versehen ist, die entlang der radialen Richtung des Stiftkörpers (861) durchdringt; die offene Nut (862) mit mindestens einem Ansatz (863) versehen ist, der sich entlang der axialen Richtung des Stiftkörpers (861) erstreckt, wobei ein oberes Ende des Ansatzes (863) mit einer Nutoberseite der offenen Nut (862) verbunden ist, und eine Kerbe (864) zwischen einem unteren Ende des Ansatzes (863) und einem Nutboden der offenen Nut (862) vorgesehen ist; der Ansatz (863) in die Nut (832) eingesetzt ist, und eine dem Ansatz (863) gegenüberliegende Seite des Stiftkörpers (861) in die konkave Bogenfläche (91) eingesetzt ist.

5. Bodenspurweitenwechselstruktur mit einem Spurwechselfahrwerk nach Anspruch 4, **dadurch gekennzeichnet, dass** eine Bodenfläche des Stiftkörpers (861) jeweils auf beiden Seiten der Mittelachse (82) des Stiftkörpers (861) als von der Mittelachse (82) nach beiden Seiten aufwärts geneigte Führungsschräge (865) vorgesehen ist; der Stiftkörper (861) in dem Achslagerkörper (90) durch eine Rückstellfeder montiert ist; ein oberes Ende des Stiftkörpers (861) mit der Rückstellfeder verbunden ist und ein unteres Ende des Stiftkörpers (861) sich über eine Bodenfläche des Achslagerkörpers (90) hinaus erstreckt.

6. Bodenspurweitenwechselstruktur mit einem Spurwechselfahrwerk nach Anspruch 5, **dadurch gekennzeichnet, dass** ein dem Entriegelungsabschnitt (50) gegenüberliegender Abschnitt der Tragschiene (10) mit einer nach oben geneigten Entriegelungsschräge (100) versehen ist; ein dem Verriegelungsabschnitt (60) gegenüberliegender Abschnitt der Tragschiene (10) mit einer nach unten geneigten Verriegelungsschräge (110) versehen ist, und die Entriegelungsschräge (100), die Verriegelungsschräge (110) und die Führungsschräge (865) denselben Neigungswinkel aufweisen.

7. Bodenspurweitenwechselstruktur mit einem Spurwechselfahrwerk nach einem der Ansprüche 1 bis 6, **dadurch gekennzeichnet, dass** die Schiebe- und Positioniervorrichtung (70) mehrere Teleskopschiebestangen (71) aufweist, die in Abständen entlang der Längsrichtung der Tragschiene (10) angeordnet sind, und die axiale Richtung der Teleskopschiebestange (71) senkrecht zur Längsrichtung der Tragschiene (10) verläuft.

8. Bodenspurweitenwechselstruktur mit einem Spurwechselfahrwerk nach Anspruch 7, **dadurch gekennzeichnet, dass** die Schiebe- und Positioniervorrichtung (70) ferner ein feststehendes Teil aufweist, das an einem Boden befestigt ist, wobei sich die Teleskopschiebestange (71) entlang der axialen Richtung des feststehenden Teils hin und her bewegt, und ein Ende der Teleskopschiebestange (71) mit einer elastischen Hülse versehen ist.

9. Bodenspurweitenwechselstruktur mit einem Spurwechselfahrwerk nach Anspruch 8, **dadurch gekennzeichnet, dass** die Schiebe- und Positioniervorrichtung (70) ein hydraulischer oder pneumatischer Antrieb ist.

10. Bodenspurwechselvorrichtung mit einem Spurwechselfahrwerk nach Anspruch 7, **dadurch gekennzeichnet, dass** die Spurweite zwischen dem Paar erster Führungsschienen (20) kleiner ist als die Spurweite zwischen dem Paar zweiter Führungsschienen (40); die Schiebe- und Positioniervorrichtung (70) an einer Außenseite der Tragschiene (10) gegenüber dem Entriegelungsabschnitt (50) und an einer Innenseite des Verriegelungsabschnitts (60) angeordnet ist.

11. Bodenspurweitenwechselstruktur mit einem Spurwechselfahrwerk nach Anspruch 10, **dadurch gekennzeichnet, dass** die Schiebe- und Positioniervorrichtungen (70) so angeordnet sind, dass sie sich entlang beider Enden des Entriegelungsabschnitts (50) nach außen erstrecken; die Schiebe- und Positioniervorrichtungen (70) so angeordnet sind, dass sie sich entlang beider Enden des Verriegelungsabschnitts (60) nach außen erstrecken.

12. Bodenspurweitenwechselstruktur mit einem Spurwechselfahrwerk nach Anspruch 10, **dadurch gekennzeichnet, dass** Positionierlöcher für den Durchgang der Teleskopschiebestange (71) jeweils an Positionen auf dem Paar der Tragschienen (10) außerhalb des Entriegelungsabschnitts gegenüber der Schiebe- und Positionierungsvorrichtung (70) vorgesehen sind.

## Revendications

1. Structure de variation d'écartement au sol avec un bogie à écartement variable, la structure de variation d'écartement au sol comprenant une paire de rails de support (10) prévus en parallèle et une paire de premiers rails de guidage (20), une paire de rails de guidage à écartement variable (30), et une paire de seconds rails de guidage (40) prévus en séquence le long de côtés intérieurs de la paire de rails de support (10) ; une section de déverrouillage (50) est prévue entre chacun des premiers rails de guidage (20) et chacun des rails de guidage à écartement variable (30), et une section de verrouillage (60) est prévue entre chacun des rails de guidage à écartement variable (30) et chacun des seconds rails de guidage (40) ; un côté intérieur/extérieur de la section de déverrouillage (50) et un côté intérieur/extérieur de la section de verrouillage (60) sont respectivement pourvus d'un dispositif de poussée et de positionnement qui applique une poussée latérale à un essieu monté à écartement variable (80) d'un bogie à écartement variable passant par la section de déverrouillage (50) et la section de verrouillage (60) ; l'essieu monté à écartement variable (80) comprend des roues (81), un essieu (82) et des mécanismes de verrouillage ; un corps de boîte d'essieu (90) est disposé à chacune des deux extrémités de l'essieu (82) ; le mécanisme de verrouillage comprend un manchon intérieur, un palier à roulement (84), un manchon extérieur (83) et des broches de verrouillage (86) ;
**caractérisée en ce qu'**une surface d'extrémité intérieure du corps de boîte d'essieu (90) est pourvue d'un trou traversant pour permettre au manchon extérieur (83) de coulisser, des butées intérieures (92) sont formées à une circonférence du trou traversant, un couvercle d'extrémité extérieur (93) est disposé sur une surface d'extrémité extérieure du corps de boîte d'essieu (90), et des butées extérieures (94) sont respectivement disposées sur les deux extrémités axiales inférieures du corps de boîte d'essieu (90) ; une extrémité du premier rail de guidage (20) faisant face au rail de guidage à écartement variable (30) est configurée sous la forme d'une première surface inclinée vers le bas, et une extrémité du second rail de guidage (40) faisant face au rail de guidage à écartement variable (30) est configurée sous la forme d'une seconde surface inclinée vers le haut.

2. Structure de variation d'écartement au sol avec un bogie à écartement variable selon la revendication 1, **caractérisée en ce que** ; les roues (81) sont respectivement prévues aux deux extrémités de l'essieu (82) et sont reliées à l'essieu (82) par des cannelures ; les mécanismes de verrouillage sont respectivement prévus sur les côtés extérieurs des roues (81) et positionnés dans le corps de boîte d'essieu (90) ; les mécanismes de verrouillage sont reliés aux roues (81) et le dispositif de poussée et de positionnement (70) applique une poussée latérale aux roues (81) passant à travers la section de déverrouillage (50) et la section de verrouillage (60).

3. Structure de variation d'écartement au sol avec un bogie à écartement variable selon la revendication 2, **caractérisée en ce que**,
le manchon intérieur, le palier à roulement (84), et le manchon extérieur (83) sont manchonnés de manière serrée en séquence de l'intérieur vers l'extérieur, le manchon intérieur est en ajustement avec jeu avec l'essieu (82), et une extrémité du manchon intérieur faisant face à la roue (81) s'étend au-delà du corps de boîte d'essieu (90) et est reliée de manière ferme à la roue (81) ; le manchon extérieur (83) est en ajustement avec jeu avec une surface intérieure du corps de boîte d'essieu (90) ; les côtés opposés à l'extérieur du manchon extérieur (83) sont pourvus de bossages (831) s'étendant axialement le long du manchon extérieur (83), et une pluralité de cannelures (832) sont disposées à des intervalles le long des directions longitudinales des bossages (831) ; une paroi latérale intérieure du corps de boîte d'essieu (90) est pourvue de surfaces en arc concaves (91) correspondant aux cannelures (832), respectivement, et un espace de verrouillage de la broche de verrouillage (86) est défini par les cannelures (832) et les surfaces en arc concaves (91).

4. Structure de variation d'écartement au sol avec un bogie à écartement variable selon la revendication 3, dans lequel la broche de verrouillage (86) comprend un corps de broche (861), dont un côté est pourvu d'une rainure ouverte (862) pénétrant le long de la direction radiale du corps de broche (861) ; la rainure ouverte (862) est pourvue d'au moins une patte (863) s'étendant le long de la direction axiale du corps de broche (861), une extrémité supérieure de la patte (863) est reliée à un sommet de rainure de la rainure ouverte (862), et une encoche (864) est réservée entre une extrémité inférieure de la patte (863) et un fond de rainure de la rainure ouverte (862) ; la patte (863) est insérée dans la cannelure (832), et un côté du corps de broche (861) opposé à la patte (863) est inséré dans la surface en arc concave (91).

5. Structure de variation d'écartement au sol avec un bogie à écartement variable selon la revendication 4, **caractérisée en ce qu'**une surface inférieure du corps de broche (861) est respectivement prévue des deux côtés de l'axe central (82) du corps de broche (861) en tant qu'inclinaison de guidage (865) en pente vers le haut à partir de l'axe central (82) vers les deux côtés ; le corps de broche (861) est monté dans le corps de boîte d'essieu (90) par l'intermédiaire d'un ressort de rappel ; une extrémité supérieure du corps de broche (861) est reliée au ressort de rappel, et une extrémité inférieure du corps de broche (861) s'étend au-delà d'une surface inférieure du corps de boîte d'essieu (90).

6. Structure de variation d'écartement au sol avec un bogie à écartement variable selon la revendication 5, **caractérisée en ce qu'**une section du rail de support (10) opposée à la section de déverrouillage (50) est pourvue d'une inclinaison de déverrouillage en pente vers le haut (100) ; une section du rail de support (10) opposée à la section de verrouillage (60) est pourvue d'une inclinaison de verrouillage en pente vers le bas (110), et l'inclinaison de déverrouillage (100), l'inclinaison de verrouillage (110) et l'inclinaison de guidage (865) présentent le même angle de pente.

7. Structure de variation d'écartement au sol avec un bogie à écartement variable selon l'une quelconque des revendications 1 à 6, **caractérisée en ce que** le dispositif de poussée et de positionnement (70) comprend une pluralité de tiges de poussée télescopiques (71) agencées à des intervalles le long de la direction longitudinale du rail de support (10), et la direction axiale de la tige de poussée télescopique (71) est perpendiculaire à la direction longitudinale du rail de support (10).

8. Structure de variation d'écartement au sol avec un bogie à écartement variable selon la revendication 7, **caractérisée en ce que** le dispositif de poussée et de positionnement (70) comprend en outre une partie fixe fixée à un sol, la tige de poussée télescopique (71) se déplace en va-et-vient le long de la direction axiale de la partie fixe, et une extrémité de la tige de poussée télescopique (71) est pourvue d'un manchon élastique.

9. Structure de variation d'écartement au sol avec un bogie à écartement variable selon la revendication 8, **caractérisée en ce que** le dispositif de poussée et de positionnement (70) est un actionneur hydraulique ou pneumatique.

10. Structure de variation d'écartement au sol avec un bogie à écartement variable selon la revendication 7, **caractérisée en ce que** l'écartement entre la paire de premiers rails de guidage (20) est plus petit que l'écartement entre la paire de seconds rails de guidage (40) ; le dispositif de poussée et de positionnement (70) est disposé sur un côté extérieur du rail de support (10) opposé à la section de déverrouillage (50), et est disposé sur un côté intérieur de la section de verrouillage (60).

11. Structure de variation d'écartement au sol avec un bogie à écartement variable selon la revendication 10, **caractérisée en ce que** les dispositifs de poussée et de positionnement (70) sont agencés en s'étendant vers l'extérieur le long des deux extrémités de la section de déverrouillage (50) ; les dispositifs de poussée et de positionnement (70) sont agencés en s'étendant vers l'extérieur le long des deux extrémités de la section de verrouillage (60).

12. Structure de variation d'écartement au sol avec un bogie à écartement variable selon la revendication 10, **caractérisée en ce que** des trous de positionnement pour permettre à la tige de poussée télescopique (71) de passer sont respectivement prévus à des positions sur la paire des rails de support (10) à l'extérieur de la section de déverrouillage à l'opposé du dispositif de poussée et de positionnement (70).
